**Europäisches Patentamt**

**European Patent Office**

**Office européen des brevets**

(19)

(11) Veröffentlichungsnummer: **0 240 604**
**B1**

(12) # EUROPÄISCHE PATENTSCHRIFT

(45) Veröffentlichungstag der Patentschrift:
28.06.89

(51) Int. Cl.⁴: **A47J 41/02, B65D 53/02**

(21) Anmeldenummer: **86116676.7**

(22) Anmeldetag: **01.12.86**

(54) **Isolierkanne mit einer elastischen Dichtung.**

(30) Priorität: **03.04.86 DE 3611145**

(43) Veröffentlichungstag der Anmeldung:
**14.10.87 Patentblatt 87/42**

(45) Bekanntmachung des Hinweises auf die Patenterteilung:
**28.06.89 Patentblatt 89/26**

(84) Benannte Vertragsstaaten:
**AT BE CH DE ES FR GB GR IT LI LU NL SE**

(56) Entgegenhaltungen:
**DE-A- 2 461 557**
**DE-A- 3 414 429**
**FR-A- 1 427 989**
**US-A- 4 460 104**

(73) Patentinhaber: **Rotpunkt Dr. Anso Zimmermann,**
**Industriestrasse, D-6434 Niederaula / Bad Hersfeld(DE)**

(72) Erfinder: **Zimmermann, Anso, Dr.,**
**Königsbergerstrasse 11, D-6434 Niederaula(DE)**

(74) Vertreter: **Körber, Wolfhart, Dr. et al, Patentanwälte**
**Dipl.-Ing. H. Mitscherlich Dipl.-Ing. K. Gunschmann**
**Dr.rer.nat. W. Körber Dipl.Ing. J. Schmidt-Evers Dipl.-Ing.**
**W. Melzer Steinsdorfstrasse 10, D-8000 München 22(DE)**

## Beschreibung

Die Erfindung bezieht sich auf eine Isolierkanne nach dem Oberbegriff des Anspruches 1.

Es ist bei Isolierkannen üblich, die Abdichtung zwischen dem Verschlußstopfen und dem Gehäuse der Isolierkanne durch Druckausübung auf das Dichtungselement herbeizuführen. Bei Isolierkannen mit einer oberseitigen Ausnehmung, in die der Verschlußstopfen einsetzbar ist, und von der ein Ausgießer oder ein Kanal seitlich abzweigt, ist das in der Regel durch eine Dichtungsscheibe oder einen Dichtungsring gebildete Dichtungselement an der Unterseite des Verschlußstopfens angeordnet, und es wirkt mit dem Grund der Ausnehmung zusammen, der die vorhandene Öffnung der Isolierkanne umgibt (DE-OS 2 548 199, DE-OS 3 342 356, DE-OS 3 433 354).

Bei bekannten Isolierkannen mit einem rohrförmigen Ausgießer ist es schon bekannt geworden, zusätzlich eine Dichtung zwischen der Oberseite des Gehäuses und einem die Oberseite übergreifenden Kragen des Verschlußstopfens vorzusehen, um zu verhindern, daß in einer stark geneigten Ausgießstellung der Kanne Flüßigkeit zwischen dem Verschlußstopfen und dem oberen Rand des Gehäuses austritt.

Es ist außerdem eine Bauart bekannt, bei der im Verschlußstopfen ein die Abdichtung umgehender Ausgießkanal angeordnet ist, der durch einen sich durch den Verschlußstopfen hindurch erstreckenden Verschlußmechanismus mit einem Verschlußglied verschließbar ist.

Bei den vorbeschriebenen Bauarten können Abdichtungsprobleme dadurch entstehen, daß zum einen die Dichtungsfläche selbst nicht eben ist und zum anderen aufgrund von sich ggf. addierenden Maßabweichungen sich unterschiedliche Ausgangs- und Endpositionen für die Dichtung bzw. die Dichtungsfläche ergeben, wodurch die Abdichtung beeinträchtigt wird. Das Problem ist herstellungstechnisch bedingt sowie vom Material der Teile der Isolierkanne abhängig, und es stellt sich auch bei Isolierkannen aus Kunststoff. Bisher hat man zur Lösung des vorliegenden Problems, elastische, d.h., komprimierbare Dichtungselemente vorgesehen, die zwar Toleranzausgleiche ermöglichen, jedoch aus handhabungstechnischen Gründen nachteilig sind, weil das Zusammenpressen des Dichtungselements mit einem bedeutenden Kraftaufwand verbunden ist. Außerdem führt der verhältnismäßig hohe Kraftaufwand zu einem erhöhten Verschleiß, wodurch die Lebensdauer der Dichtung herabgesetzt wird. Die vorbeschriebene Problematik stellt sich insbesondere bei Isolierkannen mit solchen Schraubstopfen, denen z.B. durch Markierungen eine bestimmte Öffnungs- und Schließstellung zugeordnet ist. Bei einer bekannten Bauart ist der Schraubstopfen zwischen seiner Offen- und Schließstellung um 180° so zu verdrehen, daß die Markierung in der Offenstellung auf der zum Ausgießer weisenden Seite und in der Schließstellung auf der entgegengesetzten Seite angeordnet ist. Bei dieser Bauart gibt es hierdruch eine weitere Ursache für mögliche Maßabweichungen.

Der Erfindung liegt die Aufgabe zugrunde, eine Isolierkanne der eingangs bezeichneten Bauart so auszugestalten, daß eine sichere Abdichtung auch beim Vorhandensein verhältnismäßig großer Maßabweichungen der Dichtungsteile zueinander erreicht wird.

Diese Aufgabe wird durch die im Anspruch 1 enthaltenen Kennzeichnungsmerkmale gelöst.

Bei der erfindungsgemäßen Ausgestaltung erfolgt keine Komprimierung der elastischen Dichtung, sondern es wird durch das Verschließen auf die Dichtungslippen eine Biegespannung ausgeübt, unter der die Dichtungslippen verbiegen. Dabei ist die Biegefestigkeit der Dichtungslippen größer bemessen als die Druckkräfte, die die in der Kanne aufgenommene Flüssigkeit auf die Dichtungslippen ausübt. Hierdurch ist die Abdichtung bei einer handhabungsfreundlichen Bedienung des Verschlußstopfens gewährleistet, denn es braucht beim Verschließen lediglich die Biege-Vorspannung aufgebracht zu werden, die geringer ist, als die zur Komprimierung des Dichtungselementes notwendige Spannung beim Stand der Technik. Darüberhinaus ermöglicht die erfindungsgemäße Ausgestaltung eine große Beweglichkeit der Dichtungslippen, wodurch auch große Maßtoleranzen ausgeglichen werden können, ohne daß es zu einer wesentlichen Vergrößerung der Biegespannung kommt. Letzteres wird durch den Freiraum zwischen den Dichtungslippen ermöglicht, in den hinein sich die Dichtungslippen biegen können.

Aufgrund der erfindungsgemäßen Biegespannung ist auch die Anpassung der Dichtungslippen an Unebenheiten der Dichtungsflächen gewährleistet.

Insbesondere bei einem Schraubstopfen, dessen Schließstellung durch eine Markierung vorbestimmt ist, ergibt die erfindungsgemäße Ausgestaltung auch bei exakter Einhaltung der Schließstellung die erwünschte Abdichtung. Bei einer solchen Ausgestaltung machen sich bei der bekannten Ausgestaltung Maßabweichungen besonders deutlich als Fehlstellungen des Schraubstopfens bemerkbar.

Es ist vorteilhaft gemäß Anspruch 2 das Dichtungselement symmetrisch auszubilden, so daß bei dessen Einbau die Gefahr einer Seitenverwechslung nicht besteht.

Die Ausbildung nach Anspruch 3 ermöglicht eine leichte Montage bzw. Demontage des Dichtungselementes.

Bei der erfindungsgemäßen Ausgestaltung erfolgt die Abdichtung zum Verschlußstopfen hin automatisch durch die Biege- bzw. Reaktionskraft, die auf das Dichtungselement insgesamt wirkt.

Nachfolgend wird die Erfindung anhand eines in Zeichnungen dargestellten bevorzugten Ausführungsbeispiels näher erläutert. Es zeigt:

Fig. 1 eine erfindungsgemäß ausgestaltete Isolierkanne mit einem Schraubstopfen im teilweisen senkrechten Schnitt;

Fig. 2 und 3 in vergrößerter Darstellung das zwischen dem Schraubstopfen und dem Gehäuse der Isolierkanne wirksame Dichtungselement im axialen Schnitt.

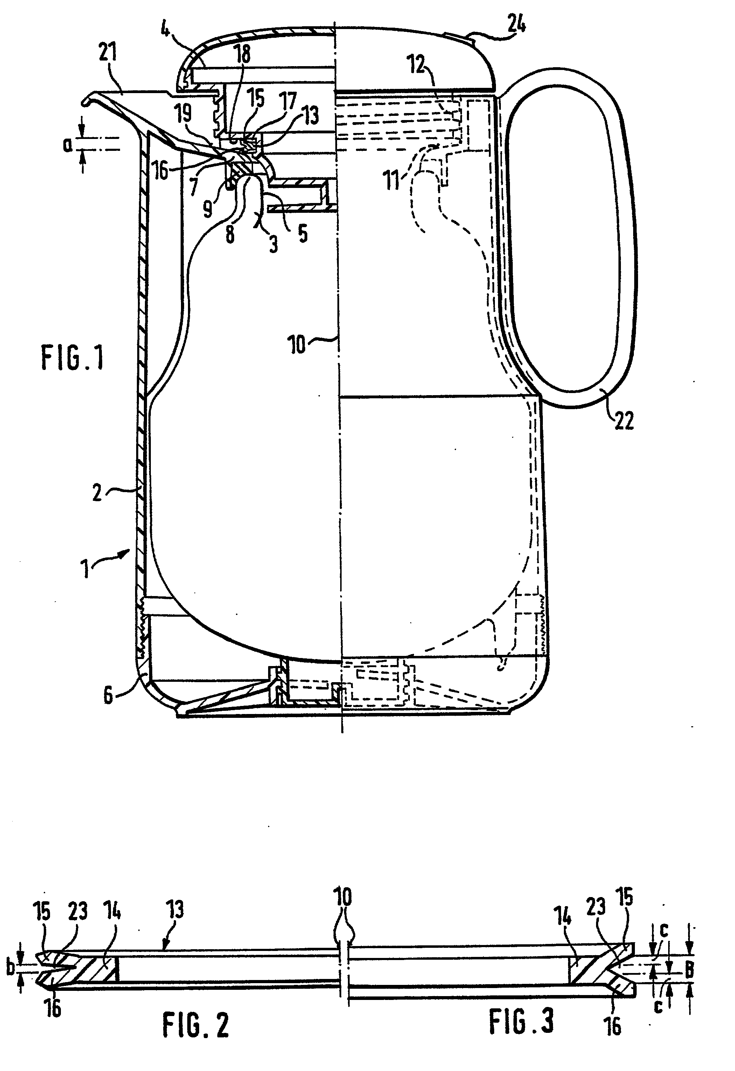

Die in Fig. 1 allgemein mit 1 bezeichnete Isolierkanne besteht aus dem Gehäuse 2, einem darin aufgenommenen Isoliereinsatz 3 und dem Schraubstopfen 4, mit dem die Füllöffnung 5 der Isolierkanne 1 verschließbar ist.

Der Isoliereinsatz 3, bei dem sich um eine doppelwandiges, evakuiertes Glasgefäß handelt, ist zwischen einem einschraubbaren Bodenteil 6 und einer inneren Schulter 7 des Gehäuses 2 eingespannt, wobei zwischen dem Rand 8 des Isoliereinsatzes 3 und der Schulter 7 ein Dichtungsring 9 angeordnet ist. Die die Füllöffnung 5 umgebende Schulter 7 bildet den Boden einer oberseitigen runden Ausnehmung 11 im Gehäuse 2, in die der Schraubstopfen 4 aufgrund eines vorhandenen Gewindes 12 einschraubbar ist.

An der Unterseite des Schraubstopfens 4 ist ein im Querschnitt Y-förmiges Dichtungselement 13 in Form eines Ringes angeordnet, wobei bezüglich der Mittelachse (10) der Isolierkanne 1 der Steg 14 der Y-Form radial nach innen und die beiden Dichtungslippen 15, 16 bildenden Schenkel radial nach außen weisen.

Der Dichtungsring 13 ist mit seinem Steg 14 in einer Umfangsnut 17 am Schraubstopfen 4 gehalten, wobei in der in Fig. 1 dargestellten Schließstellung des Schraubstopfens 4 die letzterem zugewandte Dichtungslippe 15 mit einer unterseitigen Stufenfläche 18 des Schraubstopfens 4 und die dem letzteren abgewandte Dichtungslippe 16 mit der Oberseite 19 der Schulter 7 dichtend zusammenwirkt. In der in Fig. 3 dargestellten Offenstellung des Dichtungsrings 13 befindet sich die Dichtungslippe 16 in einem in Fig. 1 mit a bezeichneten Abstand von der Oberseite 19 der Schulter 7, so daß ein Ringspalt zum Ausgießen mit einem seitlich von der Ausnehmung 11 ausgehenden, einstückig an das Gehäuse angeformten Ausgießer 21 geschaffen ist. Zur Handhabung der Kanne dient ein dem Ausgießer 21 diametral gegenüberliegender, ebenfalls einstückig an das Gehäuse 2 angeformter Griff 22.

Die Fig. 2 zeigt die Querschnittsform des Dichtungsrings 19 in der Schließstellung des Schraubstopfens 4, während in Fig. 3 die Querschnittsform des entspannten Dichtungsringes 13 dargestellt ist. Der zwischen den Dichtungslippen 15, 16 vorhandene Freiraum 23 bzw. Abstand ermöglicht eine Biegung der Dichtungslippen 15, 16 jeweils in Richtung auf die andere Dichtungslippe. Die Biegespannung jeder Dichtungslippe ist größer bemessen, als die Spannung, die die im Isoliereinsatz 3 vorhandene Flüssigkeit auf die Dichtungslippe 16 auszuüben vermag, wodurch die Abdichtung gewährleistet ist, egal, wie weit die Dichtungslippe 16 bzw. beide Dichtungslippen eingebogen sind. Der Unterschied zwischen dem größten Abstand B und dem kleinsten Abstand b zwischen den Dichtungslippen 15, 16 der theoretisch 0 sein kann, ist in Fig. 3 mit c bezeichnet. Durch die Beweglichkeit der Dichtungslippen 15, 16 ist der Dichtungsring 13 an verhältnismäßig große Maßunterschiede automatisch anpaßbar, ohne daß mit einer Beeinträchtigung der Abdichtung zu rechnen ist. Solche Maßunterschiede können sowohl auf Unebenheiten der Oberseite 19 beruhen, als auch auf unterschiedliche Abstände c der Dichtungslippe 16 von Bezugskanten des Gehäuses bezüglich der Schließstellung des Schraubenstopfens 4, in der eine Markierung 24 in Form einer runden Erhebung sich auf der dem Griff 22 zugewandten Seite befindet.

Außerdem ermöglicht die erfindungsgemäße Ausgestaltung eine leichte Handhabung, weil das Dichtungselement nich komprimiert werden muß, wie es beim Stand der Technik der Fall ist.

Im Rahmen der Erfindung ist es möglich, den Steg 14 des Dichtungsring 13 in der Umfangsnut 17 dicht einzusetzen, z.B. durch Kleben oder Klemmen.

Ein andere Vorteil der erfindungsgemäßen Ausgestaltung besteht darin, daß beim Vorhandensein eines Schraubstopfens 4 dessen Schließstellung in Bezug auf das Gehäuse vorbestimmt werden kann, ohne daß bei üblichen Maßunterschieden die Abdichtung beeinträchtigt wird. Dies ist aufgrund der Beweglichkeit der Dichtungslippen 15, 16 gewährleistet.

Es ist somit auch möglich, dem Schraubstopfen, hierbei könnte es sich auch um einen Stopfen mit Bajonettverschluß handeln, einen festen Anschlag in seiner Schließstellung oder auch in seiner Offenstellung zuzuordnen, ohne daß zu befürchten ist, daß bei ungünstigen Maßunterschieden der für eine befriedigende Abdichtung erforderliche Andruck nicht erreicht wird.

Um negative und positive Maßunterschiede auszugleichen, ist zu empfehlen, die Isolierkanne so auszubilden, daß in der Schließposition der Dichtungsring 13 sich bezüglich seines Biegebereichs in seiner Mittelstellung befindet.

Der Dichtungsring 13 besteht aus Kunststoff. Außerdem bestehen beim vorbeschriebenen Ausführungsbeispiel auch das Gehäuse 2 und der Schraubstopfen 4 aus Kunststoff.

**Patentansprüche**

1. Isolierkanne mit einem Verschlußstopfen, insbesondere Schraubstopfen, dessen Schließstellung in Umfangsrichtung durch eine Markierung oder dgl. festgelegt ist, an dem ein Dichtungselement (13) mit einer sich radial erstreckenden Dichtungslippe angeordnet ist, die in der Schließstellung auf einer sich etwa radial erstreckenden Dichtungsfläche (19) am Gehäuse (2, 7) der Isolierkanne aufliegt, wobei das Dichtungselement (13) aus einem biegeelastischen Material besteht, dadurch gekennzeichnet, daß das Dichtungselement (13) eine durch zwei Dichtungslippen (15, 16) gebildete Y-förmige Querschnittsform aufweist, wobei die obere Dichtungslippe (15) mit einer unterseitigen Dichtungsfläche (18) des Verschlußstopfens (4) und die untere Dichtungslippe (16) mit der Dichtungsfläche (19) am Gehäuse (2, 7) zusammenwirkt, und daß die Biegefestigkeit der Dichtungslippen (15, 16) größer bemessen ist als die Biegespannung, die durch Druck der aufgenommenen Flüssigkeit auf die Dichtungslippen (15, 16) aufgebracht wird.

2. Isolierkanne nach Anspruch 1, dadurch gekennzeichnet, daß die Querschnittsform des Dichtungselements (13) symmetrisch ist.

3. Isolierkanne nach Anspruch 1 oder 2, dadurch gekennzeichnet, daß das Dichtungselement (13) mit Bewegungsspiel in einer Umfangsnut (17) des Verschlußstopfens (4) gehalten ist.

## Claims

1. An insulating jug having a stopper, in particular a screw stopper, whose closed position in the circumferential direction is set by a mark or the like, and on which there is arranged a sealing element (13) that has a generally radially extending sealing lip which, in the closed position, lies on a generally radially extending sealing surface (19) of the housing (2, 7) of the insulating jug, the sealing element (13) consisting of a flexibel, elastic material, characterised in that the sealing element (13) has a Y-shaped cross-section formed by two sealing lips (15, 16), the upper sealing lip (15) cooperating with a sealing surface (18) on the underside of the stopper (4), and the lower sealing lip (16) cooperating with the sealing surface (19) on the housing (2, 7), and that the bending strength of the sealing lips (15, 16) is greater than the bending stress exerted on the sealing lips (15, 16) by pressure from the contained liquid.

2. An insulating jug according to claim 1, characterised in that the cross-section of the sealing element (13) is symmetrical.

3. An insulating jug according to claim 1 or claim 2, characterised in that the sealing element (13) is held with play in a circumferential groove (17) in the stopper (4).

## Revendications

1. Récipient isolant avec un bouchon d'obturation, en particulier un bouchon vissant, dont la position de fermeture dans le sens périphérique est fixée par un repère ou un moyen analogue, bouchon sur lequel est disposé un élément d'étanchéité (13) avec une lèvre d'étanchéité s'étendant à peu près radialement, qui s'applique en position de fermeture sur une surface d'étanchéité (19) sur le boîtier (2, 7) du récipient isolant, l'élément d'étanchéité (13) étant constitué d'un matériau flexibel élastique, caractérisé en ce que l'élément d'étanchéité (13) présente une forme en section transversale en forme d'Y constituée par deux lèvres d'étanchéité (15, 16), la lèvre d'étanchéité supérieure (15) coopérant avec une portée de joint (18) sur la face inférieure du bouchon d'obturation (4) et la lèvre d'étanchéité inférieure (16) coopérant avec la portée de joint (19) sur le boîtier (2, 7), et en ce que la résistance à la flexion des lèvres d'étanchéité (15, 16) est mesuré plus forte que la contrainte de flexion exercée sur les lèvres d'étanchéité (15, 16) par le liquide contenu.

2. Récipient isolant selon la revendication 1, caractérisé en ce que la forme, en section transversale, de l'élément d'étanchéité (13) est symétrique.

3. Récipient isolant selon la revendication 1 ou 2, caractérisé en ce que l'élément d'étanchéité (13) est maintenu, avec un jeu de mobilité, dans une rainure périphérique (17) du bouchon d'obturation (4).

FIG.1

FIG.2

FIG.3